(19) Europäisches Patentamt
European Patent Office
Office européen des brevets

(11) **EP 4 302 642 A1**

(12) **EUROPEAN PATENT APPLICATION**

(43) Date of publication:
**10.01.2024 Bulletin 2024/02**

(21) Application number: **22182759.5**

(22) Date of filing: **04.07.2022**

(51) International Patent Classification (IPC):
**A46B 15/00** $^{(2006.01)}$     **A61C 17/22** $^{(2006.01)}$

(52) Cooperative Patent Classification (CPC):
**A46B 15/0006;** A46B 2200/1066; A61C 17/221

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
• **PERRONE, Antonio Luigi**
  **Eindhoven (NL)**
• **RONDA, Cornelis Reinder**
  **Eindhoven (NL)**
• **GERHARDT, Lutz Christian**
  **Eindhoven (NL)**

(74) Representative: **Philips Intellectual Property &
Standards
High Tech Campus 52
5656 AG Eindhoven (NL)**

(54) **AN IMAGE PROCESSING SYSTEM AND METHOD FOR PROCESSING IMAGES OBTAINED FROM PERSONAL CARE DEVICES**

(57)     Images received from an imaging device mounted at a head of a personal care device are processed. Cleaning elements of the personal care device are visible in at least one of the images. The images are processed to generate a background image with moving parts in the sequence of images removed such that the cleaning elements of the personal care device are removed from the background image. This image provides improved image quality, with occlusion resulting from the cleaning elements addressed. This simplifies subsequent image processing, for example for caries and plaque detection.

FIG. 2

EP 4 302 642 A1

**Description**

FIELD OF THE INVENTION

This invention relates to the integration of imaging into the head of personal care devices. In particular, the invention relates to the processing of said images.

BACKGROUND OF THE INVENTION

Cameras are becoming ubiquitous in the personal care sector generally, and specifically electric tooth brushes with integrated cameras are continuously appearing in the market. The camera images are for example processed to provide feedback to a user about their tooth brushing routine, or for providing diagnostic information. For example, caries and plaque may be determined. The imaging may also be used to determine the location of the oral care head within the oral cavity (more accurately than just with a motion sensor) so that the user's oral care routine may be analyzed more accurately. This information can be used to guide a consumer in such a manner that he/she reaches all locations during their oral care routine. A history of the oral health of the user may be collected.

Thus, imaging-assisted oral care devices can be an enabler of image-based diagnostics, superior location sensing for a head of the oral care device, oral care therapy planning (e.g. orthodontics, aligners) or treatment monitoring (e.g. periodontitis). These new functions can be seamlessly integrated into the normal brushing hygiene regimen of a user, instead of requiring separate devices such as smart phones or dental endoscopes.

With such devices, a new generation of problems arises relating to the information that these sensors can detect. In particular, camera-equipped tooth brushing devices suffer from the drawback that the presence of the bristles results in interference and occlusion within the camera images. Thus, there are algorithmic complications arising from the image processing required to handle the complex images.

Acquiring images and video streams without such interference and occlusion would vastly improve both the quality of the user experience (usability of the images, enjoyability and aesthetics appeal) and the information quality and quantity that can be derived from the oral images themselves, for example for diagnostics use.

Miniaturized cameras can be easily placed almost everywhere in a device, such as the head of an oral care device. In an electric toothbrush, the key design features are the type of oscillation (i.e. the in-plane vibrations of the toothbrush head) and the geometry of the bristles. There is a large variability in the geometry of the bristles because there are many different head types, specialized for specific purposes (gum types etc.) or simply because of new more optimized versions. The oscillation type is typically in a well-defined plane, e.g. a vertical plane (when brushing the sides of the teeth).

The oscillation mode results in the bristles contacting the teeth dragging and flexing during the oscillation, depending on the user's applied force and movement type. The problem is that this mechanical behavior will bring some bristles within the field of view of a camera mounted in the oral care device head. This obstruction or occlusion of the image is a problem to be addressed.

The positions, geometry, density etc. of the bristles change with the head type. It could be possible to design the camera and optics to have a minimal obstruction for the particular bristle characteristics, but this would result in a costly and laborious adaptation of the optics or camera design or mounting to the particular bristle design.

The invention instead aims to address the problem in a more universal manner.

SUMMARY OF THE INVENTION

The invention is defined by the claims.

According to examples in accordance with an aspect of the invention, there is provided an image processing system for processing images received from an imaging device mounted at a head of a personal care device, comprising: a processor, which is configured to:

receive a sequence of images from the imaging device at the head of the personal care device, the personal care device comprising cleaning elements visible in at least one of the images in the sequence of images; and process the sequence of images to generate a background image with moving parts in the sequence of images removed such that the cleaning elements of the personal care device are removed from the background image.

This image processing approach provides greatly improved image quality, with occlusion resulting from the cleaning elements addressed. This simplifies subsequent image processing, for example for caries and plaque detection. A reduced data processing capacity and data volume are needed, because the data analysis can be implemented using a subset of images.

The imaging device may be a camera. Of course, other imaging devices may be used which are capable of capturing images from the head of the personal care device (e.g. laser scanners etc.)

Digital cameras are known that embed technology (in the form of image processing algorithms) that can remove moving objects from static objects. For example, such algorithms enable pictures to be taken of buildings for example without people in front of them. The invention uses a comparable approach to remove the presence of cleaning elements from images and video acquired by a camera mounted in a personal care device. This improvement in the generated background images improves the quality of the user experience as well as increasing the information quality and quantity which can be derived from the images themselves for diagnostic purposes or for providing advice to the user.

The personal care device may be a toothbrush and the imaging device may be embedded into the head of the toothbrush. The cleaning elements, in the context of a toothbrush, are the bristles.

The personal care device may be a skin exfoliating brush and the imaging device may be embedded into the exfoliating portion of the exfoliating brush. The cleaning elements, in the context of an exfoliating brush, are the filaments used for exfoliating.

In general, the cleaning elements are elements which are used to perform the cleaning action on the user. The cleaning elements are generally flexible. This can enable the cleaning elements to perform the cleaning action when they are pushed against a portion of the user (e.g. teeth, skin etc.).

Image registration may be used on the sequence of images. However, this may not be necessary as the background is moving much slower than the cleaning elements (e.g. bristles).

Processing the sequence of images to generate a background image with moving parts in the images removed is equivalent.

The processor may be adapted to process the sequence of images to generate the background image by using a median filter on the sequence of images.

This has been shown to be an effective and simple method to eliminate or reduce effects due to moving objects, rendering only static objects in the picture. The 'reduced' static objects can be then further analyzed.

The processor may be further configured to iteratively update the background image using the latest available image in the sequence of images.

The processor may be configured to iteratively update the background image by summing the background image and the latest available image, wherein the latest available image is weighted based on a cleaning element threshold.

The processor may be further configured to:

    detect features in the sequence of images;
    calculate an optical flow of the features between images in the sequence of images;
    identify components in the sequence of images using independent component analysis on the features;
    determine a frequency for the components using the corresponding optical flow;
    identify the cleaning elements in the sequence of images based on the components with frequencies within a frequency range from a known frequency of the cleaning elements;
    generate a cleaning element mask based on the identified cleaning elements; and
    update the bristle threshold by comparing the cleaning element mask to a background mask generated by determining the difference between the background image and an image in the sequence of images.

The cleaning element threshold may be a time varying threshold which is updated in time. Each update of the cleaning element threshold may be based on the steps above as they include the detection and identification of the cleaning elements, thereby improving the accuracy of the cleaning element threshold.

The cleaning element mask generated above is a complementary mask to the background generated mask which can be obtained using the background image (e.g. background image - latest image).

The cleaning element mask may be, for example, a bristle mask when the personal care device is a toothbrush. Of course, the cleaning element mask may also be used when using other personal care devices (e.g. exfoliating brush)

Detecting features in the sequence of images can be performed using known feature detection methods. Examples of such methods are provided in Lowe, D.G "Object recognition from Local Scale-Invariant Features" and S. Lazebnik et al. "Semi-Local Affine Parts for Object Recognition". Of course, other feature detection methods could also be used.

Calculating the optical flow can be performed by using known optical flow methods. Examples are provided in the Handbook of Mathematical Models in Computer Vision by D. Fleet and Y Weiss in chapter 15 "Optical Flow Estimation". Of course, other optical flow methods could also be used.

Independent component analysis can be performed using the methods provided in the book "Independent Component Analysis: A Tutorial Introduction" by James V. Stone. Of course, other independent component analysis methods could be used.

The processor may be configured to generate the cleaning element mask by applying morphological operations to a shape of the identified cleaning elements relative to the images of the sequence of images.

In other words, the shape of the cleaning elements in the images (i.e. the areas of the images occluded by the cleaning elements) is used to generate the cleaning element mask by applying known morphological operations (e.g. erosion and dilation) to the shape of the cleaning elements.

The processor may be configured to detect features in the sequence of images using one or more of a known geometry of the cleaning elements and a known color of the cleaning elements.

A-priori information of the cleaning elements (i.e. natural frequency and/or geometry and/or color) can be used to improve the likelihood of the feature detection to detect the cleaning elements.

The processor may be further configured to apply a high pass flow filter to the optical flows and de-noise the optical flows.

The invention also provides an electric tooth brush comprising:

a brush head comprising bristles, an imaging device and a lighting system; and
the afore-mentioned image processing system for processing the images captured by the imaging device.

The invention also provides a method for processing images received from an imaging device mounted at a head of a personal care device, the method comprising:

receiving a sequence of images from the imaging device, the personal care device comprising cleaning elements visible in at least one of the images in the sequence of images; and
processing the sequence of images to generate a background image with moving parts in the sequence of images removed such that the cleaning elements of the personal care device are removed from the background image.

Processing the sequence of images to generate the background images comprises may comprise using a temporal median filter on the sequence of images.

The method may further comprise iteratively updating the background image using the latest available image in the sequence of image.

Iteratively updating the background image may comprise summing the background image and the latest available image, wherein the latest available image is weighted based on a cleaning element threshold.

The method may further comprise:

detecting features in the sequence of images;
calculating an optical flow of the features between images in the sequence of images;
identifying components in the sequence of images using independent component analysis on the features;
determining a frequency for the components using the corresponding optical flow;
identifying the cleaning elements in the sequence of images based on the components with frequencies within a frequency range from a known frequency of the cleaning elements; and
generating a cleaning element mask based on the identified cleaning elements; and
updating the bristle detection threshold by comparing the cleaning element mask to a background mask generated by determining the difference between the background image and an image in the sequence of images.

The invention also provides a computer program comprising computer program code which is adapted, when said program is run on a computer, to implement the afore-mentioned method.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Figure 1 shows a toothbrush head with a camera;
Figure 2 shows a method for providing feedback for the user of a toothbrush;
Figure 3 shows a method for providing a video stream without bristles;
Figure 4 shows a method for updating the bristle threshold;
Figure 5 shows an illustration of the method for updating the bristle threshold;
Figure 6 shows an image with the bristles segmented out;

Figure 7 shows the mean gray levels for frames of the oral cavity; and
Figures 8 to 10 show binary masks generated in simulations using different threshold values.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides an image processing system in which images received from a camera mounted at a head of a personal care device are processed. Cleaning elements of the personal care device are visible in at least one of the images. The images are processed to generate a background image with moving parts in the sequence of images removed such that the cleaning elements of the personal care device are removed from the background image. This image provides improved image quality, with occlusion resulting from the cleaning elements addressed. This simplifies subsequent image processing, for example for caries and plaque detection.

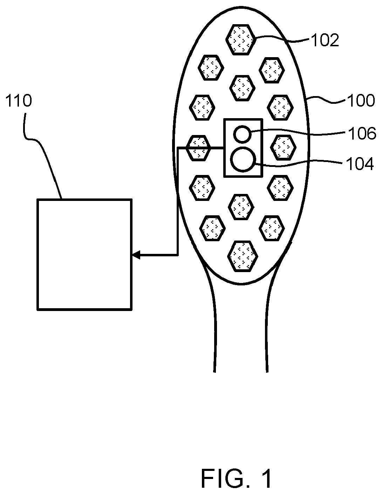

Figure 1 shows a toothbrush head 100 with a camera 104. The camera 104 is placed around the center of the bristles 102. A lighting device 106 (e.g. a light emitting diode LED) is also provided around the center of the toothbrush head 100 in order to light up the oral cavity when the toothbrush is being used such that the camera 104 can obtain visible images of the oral cavity when the toothbrush is in use. Thus, the camera (e.g. RGB camera) is used to acquire images or video sequences during regular tooth brushing.

A toothbrush will be used for the following examples. However, other personal care devices (e.g. an exfoliating skin brush, a hair brush etc.) could also be used using the same methods described below. For example, oral tissue cleaning/treatment units with cleaning elements (e.g. bristles, silicone filaments, pillars etc.) could also be used.

Preferably, the personal care device has cleaning elements with a known and well-defined geometry and oscillation frequency.

A processor can be used to perform an object identification of the cleaning elements and subsequent background subtraction. These steps may take advantage of the free oscillation frequency of the cleaning elements (e.g. in powered personal care devices) and a modified adaptive median background subtraction.

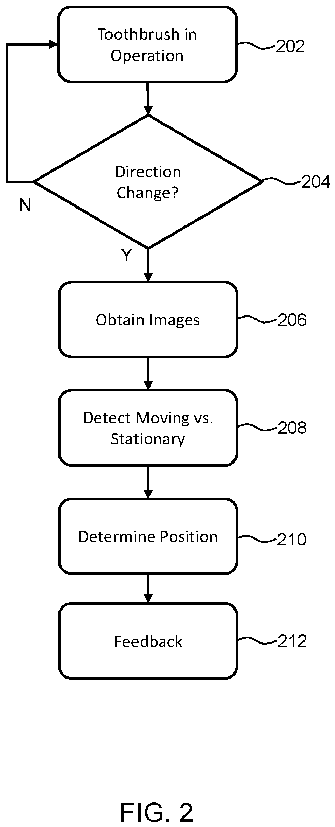

Figure 2 shows a method for providing feedback for the user of a toothbrush. Images of the teeth need to be obtained during brushing. This is performed by checking whether the toothbrush is in operation in step 202, checking whether the toothbrush has changed in direction in step 204 and, if so, obtaining/acquiring images from the camera on the toothbrush in step 206.

The central hypothesis is that the motion of the bristles of the toothbrush appears faster than the motion of the other elements in the acquired images. It is important to consider suitable positions for the camera. Since the aim of the image processing is the elimination of the bristles from the field of view of the camera while vibrating, the potential positions are at any place in the brush head in the same plane as the toothbrush head (e.g. as shown in Figure 1).

In these solutions, the toothbrush bristles are moving relative to the teeth that are being imaged or recorded, for example by the operation of the powered toothbrush.

A light source is used to illuminate the area from which images are being taken. Ideally this is a light emitting diode (LED). An advantage of an LED is that it can be triggered easily, facilitating that subsequent images are taken with the same bristles' orientation.

In step 208, algorithms are used to discriminate between moving objects and stationary objects in the obtained images. For this step, it may be advantageous to know and define the bristles' free vibration frequency and/or the bristles' geometry. This may improve the distinction between moving and stationary objects as it is known that the bristles will be moving. A distinction between the moving and stationary parts of the images enables the generation of a background image which does not include the (moving) bristles.

The camera acquisition characteristics (e.g. resolution in pixels, exposure time, frame acquisitions per second, acquisition time, etc.) are also preferably known.

The camera optical characteristics (read focal length, field of view etc.) are also preferably known.

In most cases, it will likely be assumed that the camera acquisition and/or optical characteristics are optimal for the conditions. However, it is possible use said characteristics to filter the images. For example, if the vibration frequency of the bristles coincide with the frame rate of the camera, the bristles could appear stationary in the sequence of images. Thus, these images could be filtered out. In some cases, it may also be possible to adapt the frame rate (or other characteristics) based on the sequence of images or even the field of view of the camera may be adaptive to the content of the images.

The position of the toothbrush in the mouth is then determined in step 210 (e.g. using position sensors). Additionally, or alternatively, the presence of caries/plaque in the obtained images can then be determined. In step 212, feedback is then provided to, for example, the user, a dentist or used to adapt the toothbrush (e.g. adapt the toothbrush amplitude based on feedback).

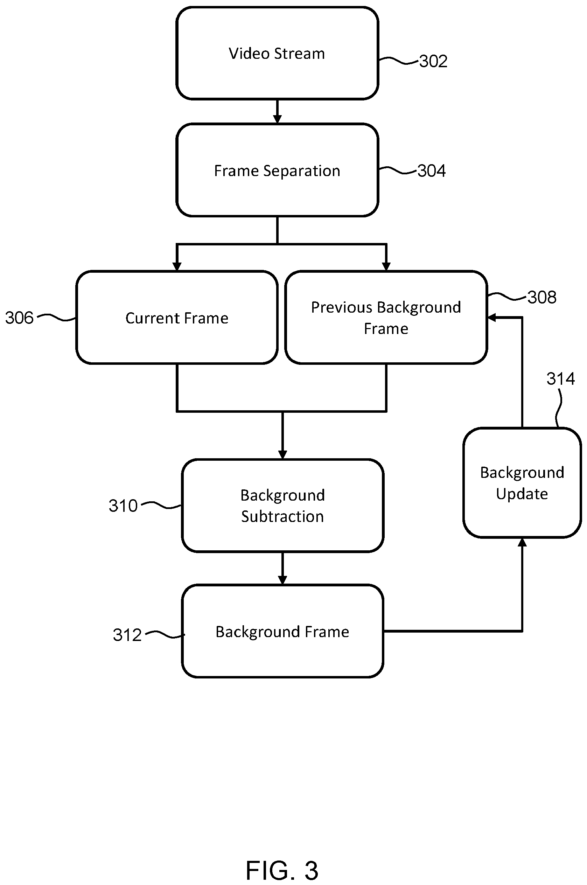

Figure 3 shows a method for providing a video stream without bristles. The video stream is a sequence of images. Initially, images from the camera are accumulated in a video stream in step 302. Frame separation (i.e. video stream decomposition) is then applied to the video stream in step 304.

A first background frame can be determined by finding the temporal median of a sequence of images obtained from the camera. This provides a background image with the bristles removed. This is possible as the bristles move much faster than the movement of the movement of the toothbrush. As such, the median pixel values over time will most likely be the background pixel value (i.e. of the mouth) as the faster moving bristles will only appear in the same position in the image for a short period of time.

It is noted that it is possible to have a background subtraction algorithm which only consists of calculating a, per-pixel, temporal median of the images for each new frame. However, it may be advantageous to modify such an algorithm to provide more robust background frames.

For example, the frames from the video stream can be analyzed to update the background of the scene in an iterative manner according to a modified background subtraction algorithm. A current (latest available) frame 306 and a previous background frame 308 are also input into the background subtraction algorithm is step 310 to obtain an updated background frame. The updated background frame 312 is defined iteratively as follows at time/frame n:

$$Background_n = (1 - \vartheta) \cdot F_n + \vartheta \cdot Background_{n-1}$$

where $F_n$ is the current (at the current time/iteration n) image/frame 306 from the camera, $\vartheta$ is a bristle threshold and *background_n-1* is the previous background frame 308. The previous background frame 308 is then updated in step 314 using the current background frame 312 for use in the next available frame. As previously discussed, the first background frame (e.g. at time = 0) can be found by applying a median filter to the video stream.

The bristle threshold is thus used as a weighting mechanism between the previous background frame and the newest current frame. In general, the bristle threshold is found based on detecting the bristles in the images. Thus, updating the background image over time using the bristle threshold provides an improvement in the quality of the background frame compared to only finding the median of a sequence of images to generate the background frame. This is because the median-based background images are generally blurry, especially in situations where the camera may move over time whilst obtaining the images. Thus, the addition of the newest frame can improve the quality of the background frame.

As previously discussed, the background subtraction algorithm can be modified to include the known properties (free vibrating frequency, shapes etc.) of the bristles. This is achieved by defining the bristle threshold using the information from the bristles (e.g. free vibration frequency, shapes, colors etc.) and, potentially, camera information (e.g. acquisition frequency, resolution etc.). The bristle threshold is used to discriminate between the vibrating bristles and the other elements of the image. Methods for determining, and further updating, the bristle threshold will be further explained below.

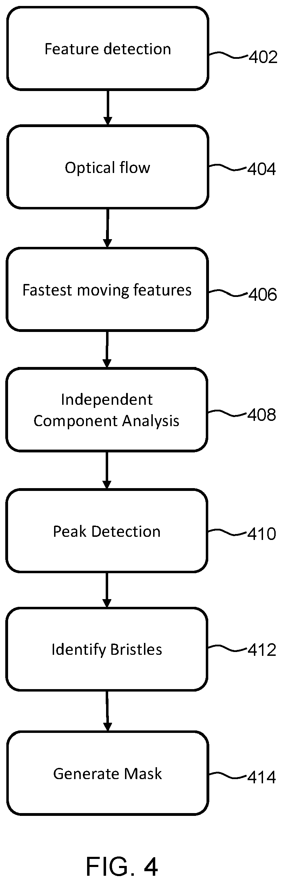

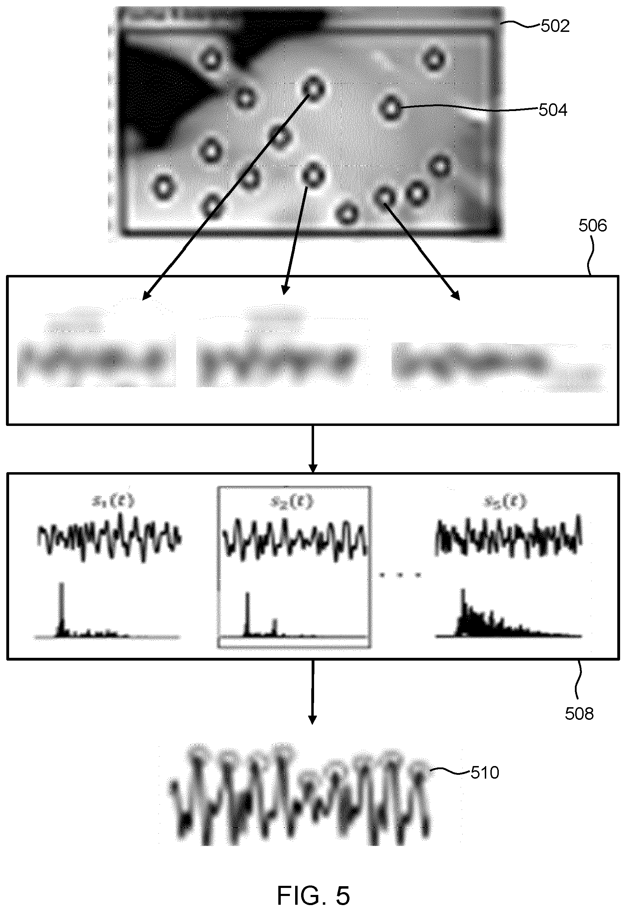

Figure 4 shows a method for defining the bristle threshold and Figure 5 shows an illustration of the method for defining the bristle threshold. The method of Figure 4 is explained with reference to the illustration of Figure 5.

The bristle threshold may be referred to as a bristle detection threshold.

According to the method for defining the bristle threshold, the known free vibration frequency f of the bristles is used. The free vibration frequency is the vibration of the bristles if there is nothing interacting with them (i.e. no pressure from the user, non-contact with surfaces etc.). Typical values of the free vibration frequency can be around 300 Hz to 520 Hz.

An algorithm is used to detect the bristles in the frames 502 of the acquired video from the toothbrush. The steps of the algorithm are the following:

- Feature points 504 are detected using geometrical descriptors of the bristles in step 402;
- An optical flow computation 506 is performed on the feature points 504 in step 404;
- The fastest moving feature points 504 are identified in step 406. This is coherent with the hypothesis that the bristles are the fastest moving objects in the video.
- Temporal filtering and/or de-noising may be performed on the signals obtained of the optical flow computation 506 to clean up the signals from random perturbations;
- An independent component analysis algorithm may be used on the signals from the optical flow computation 506 to separate the main component signals 508 in step 408;

- A peak detection algorithm is applied to each of the main components from the step 408 to identify the peaks 510 in step 410. The peaks 510 can be used to define the component frequency (e.g. average time between peaks);
- Using the known free frequency of the bristles, the bristles in the images are identified in step 412 based on the component signal 508 with the closest frequency that matches the known bristles frequency (or within a range thereof); and
- Morphological operations (e.g. erosion and dilation) are applied to the zones delimited by the selected feature points to create a bristle mask able to segment out the bristles from the images in step 414.

The bristle mask generating using this method is complementary to a background mask which can be generated by using the background frame. In particular, the background mask defines the areas of the images which correspond to the background of the images whilst the bristle mask dines the areas of the images which correspond to the bristles.

In general, the masks are a map of binary values, where one of the binary values indicates the likely presence of, for example, the bristles in the images.

The background mask can be determined by finding the difference between the background frame and, for example, the latest available frame in the sequence of frames.

As such, the bristle mask generated can be used to update the bristle threshold such that the bristle threshold used returns a more accurate background mask compared to the bristle mask.

The bristle threshold may need to be re-computed overtime. For example, if the toothbrush moves to a new area of the mouth, the background of the image may change and thus more weighting may be needed to the newer frames instead of the previous background image.

The bristle threshold is preferably updated less often than the background image is determined. This is because updating the bristle threshold will typically require more processing resources than applying the bristle threshold to the previous background frame and the latest available frame.

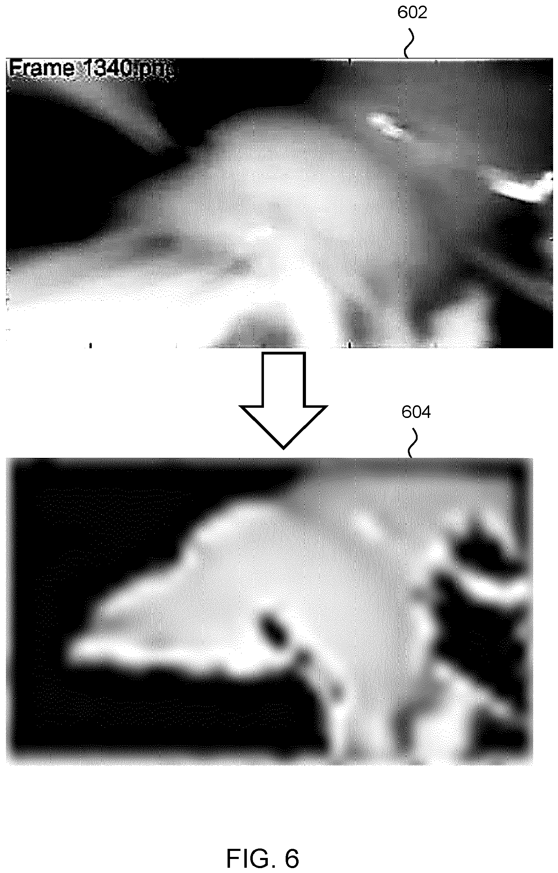

Figure 6 shows an image with the bristles segmented out. The first image 602 is a latest available frame from the image sequence (i.e. video stream). The binary mask previously mentioned can be applied to the image 602 to generate a second image 604 with the bristles segmented out.

Morphological operators of erosion and dilation are preferably applied to the areas of the image where bristles have been identified to recover the full geometry of the other elements present in the current image/frame in a bristle mask. The morphological operators are applied to complete the mask definition process. In other words, the morphological operators are designed to make the binary bristle mask more regular and adherent to the real contour of the bristles.

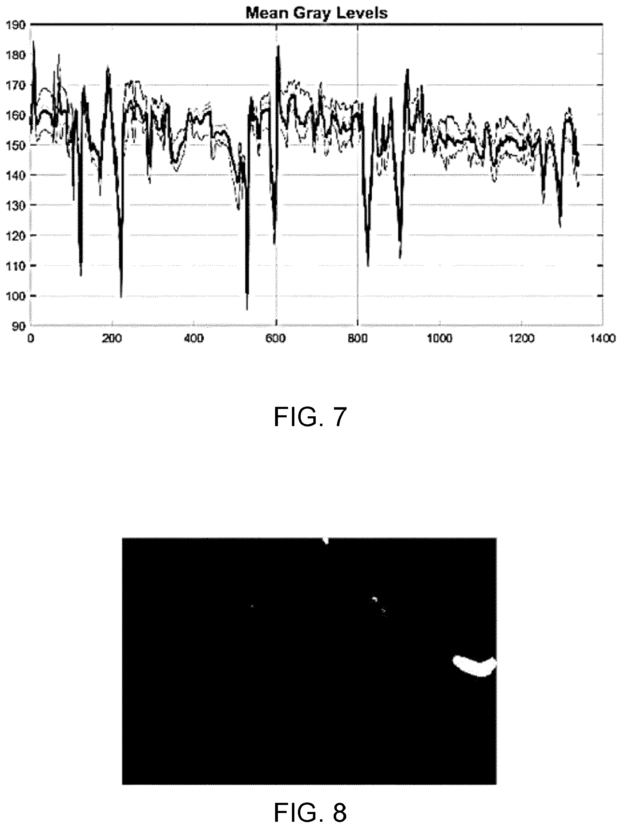

Figure 7 shows the mean gray levels for frames of the oral cavity. The mean gray levels can be used as a measurement probe of the background images to check if there are sudden, evident deformations of the images' color components profile due to the background removal algorithm. The mean gray levels of the background image may be used to determine whether the bristle threshold needs to be updated.

Other methods may also be used for determining, or updating, the bristle threshold. For example, simulations can also be performed to determine the bristle threshold.

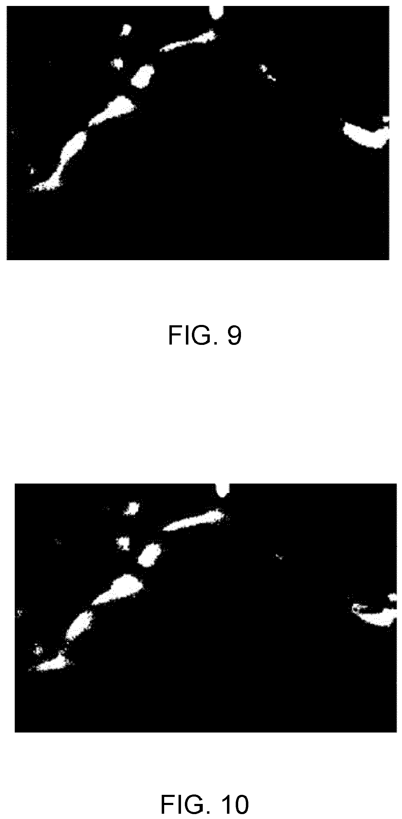

Figures 8, 9 and 10 show binary masks generated in simulations using a threshold of 0.8, 0.5 and 0.2 respectively.

The skilled person would be readily capable of developing a processor for carrying out any herein described method. Thus, each step of a flow chart may represent a different action performed by a processor, and may be performed by a respective module of the processor.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. An image processing system for processing images received from an imaging device (104) mounted at a head of a personal care device (100), comprising:
   a processor (110), which is configured to:

   receive (302) a sequence of images from the imaging device at the head of the personal care device, the personal care device comprising cleaning elements visible in at least one of the images in the sequence of images; and
   process (312) the sequence of images to generate a background image with moving parts in the sequence of images removed such that the cleaning elements of the personal care device are removed from the background image.

2. The system of claim 1, wherein the processor is adapted to process the sequence of images to generate the background image by using a median filter on the sequence of images.

3. The system of claims 1 or 2, wherein the processor is further configured to iteratively update (314) the background image using the latest available image in the sequence of images.

4. The system of claim 3, wherein the processor is configured to iteratively update the background image by summing the background image and the latest available image, wherein the latest available image is weighted based on a cleaning element threshold.

5. The system of claim 4, wherein the processor is further configured to:

   detect (402) features in the sequence of images;
   calculate (404) an optical flow of the features between images in the sequence of images;
   identify (408) components in the sequence of images using independent component analysis on the features;
   determine a frequency for the components using the corresponding optical flow;
   identify (412) the cleaning elements in the sequence of images based on the components with frequencies within a frequency range from a known frequency of the cleaning elements;
   generate (414) a cleaning element mask based on the identified cleaning elements; and
   update the bristle threshold by comparing the cleaning element mask to a background mask generated by determining the difference between the background image and an image in the sequence of images.

6. The system of claim 5, wherein the processor is configured to generate the cleaning element mask by applying morphological operations to a shape of the identified cleaning elements relative to the images of the sequence of images.

7. The system of claims 5 or 6, wherein the processor is configured to detect features in the sequence of images using one or more of a known geometry of the cleaning elements and a known color of the cleaning elements.

8. The system of any one of claim 5 to 7, wherein the processor is further configured to:

   apply a high pass flow filter to the optical flows; and
   de-noise the optical flows.

9. An electric tooth brush (100) comprising:

a brush head comprising bristles (102), an imaging device (104) and a lighting system (106); and
an image processing system of any one of claims 1 to 8 for processing the images captured by the imaging device.

10. A method for processing images received from an imaging device mounted at a head of a personal care device, the method comprising:

receiving (302) a sequence of images from the imaging device, the personal care device comprising cleaning elements visible in at least one of the images in the sequence of images; and
processing (304) the sequence of images to generate a background image with moving parts in the sequence of images removed such that the cleaning elements of the personal care device are removed from the background image.

11. The method of claim 10, wherein processing the sequence of images to generate the background images comprises using a median filter on the sequence of images.

12. The method of claims 10 or 11, further comprising iteratively updating (314) the background image using the latest available image in the sequence of image.

13. The method of claim 12, wherein iteratively updating the background image comprises summing the background image and the latest available image, wherein the latest available image is weighted based on a cleaning element threshold.

14. The method of claim 13, further comprising:

detecting (402) features in the sequence of images;
calculating (404) an optical flow of the features between images in the sequence of images;
identifying (408) components in the sequence of images using independent component analysis on the features;
determining a frequency for the components using the corresponding optical flow;
identifying (412) the cleaning elements in the sequence of images based on the components with frequencies within a frequency range from a known frequency of the cleaning elements; and
generating (414) a cleaning element mask based on the identified cleaning elements; and
updating the bristle threshold by comparing the cleaning element mask to a background mask generated by determining the difference between the background image and an image in the sequence of images.

15. A computer program comprising computer program code which is adapted, when said program is run on a computer, to implement the method of any one of claims 10 to 14.

FIG. 1

```
           ┌──────────────────┐
      ┌───▶│   Toothbrush in  │
      │    │    Operation     │───202
      │    └──────────────────┘
      │              │
      │              ▼
      │          ╱───────╲
      │        ╱           ╲
      │      ╱   Direction   ╲
      └─────◀    Change?      ◀───204
        N    ╲              ╱
              ╲           ╱
                ╲───────╱
                    │ Y
                    ▼
           ┌──────────────────┐
           │  Obtain Images   │───206
           └──────────────────┘
                    │
                    ▼
           ┌──────────────────┐
           │  Detect Moving vs.│
           │    Stationary     │───208
           └──────────────────┘
                    │
                    ▼
           ┌──────────────────┐
           │ Determine Position│───210
           └──────────────────┘
                    │
                    ▼
           ┌──────────────────┐
           │    Feedback      │───212
           └──────────────────┘
```

FIG. 2

FIG. 3

Feature detection — 402

↓

Optical flow — 404

↓

Fastest moving features — 406

↓

Independent Component Analysis — 408

↓

Peak Detection — 410

↓

Identify Bristles — 412

↓

Generate Mask — 414

FIG. 4

FIG. 5

FIG. 6

FIG. 7

FIG. 8

FIG. 9

FIG. 10

Europäisches
Patentamt

European
Patent Office

Office européen
des brevets

# EUROPEAN SEARCH REPORT

Application Number

EP 22 18 2759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/107034 A1 (SHANI YUVAL [IL] ET AL) 23 April 2015 (2015-04-23) * para. 8-12, 68 * | 1-15 | INV. A46B15/00 A61C17/22 |
| A | EP 3 858 288 A1 (KONINKLIJKE PHILIPS NV [NL]) 4 August 2021 (2021-08-04) * the whole document * | 1-15 | |
| A | GB 2 602 084 A (DYSON TECHNOLOGY LTD [GB]) 22 June 2022 (2022-06-22) * the whole document * | 1-15 | |
| A | WO 2013/001462 A2 (CHAKKA NAGESH [AU]) 3 January 2013 (2013-01-03) * the whole document * | 1-15 | |
| A | EP 3 150 082 A1 (PROCTER & GAMBLE [US]) 5 April 2017 (2017-04-05) * the whole document * | 1-15 | |
| | | | **TECHNICAL FIELDS SEARCHED (IPC)** A46B A61C |

The present search report has been drawn up for all claims

| Place of search | Date of completion of the search | Examiner |
|---|---|---|
| The Hague | 28 November 2022 | Horrix, Doerte |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 18 2759

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2022

| Patent document cited in search report | | Publication date | Patent family member(s) | | Publication date |
|---|---|---|---|---|---|
| US 2015107034 | A1 | 23-04-2015 | AU | 2014338568 A1 | 05-05-2016 |
| | | | BR | 112016008974 A2 | 01-08-2017 |
| | | | CA | 2925029 A1 | 30-04-2015 |
| | | | CN | 105744911 A | 06-07-2016 |
| | | | EP | 3060160 A1 | 31-08-2016 |
| | | | IL | 244826 A | 31-12-2017 |
| | | | JP | 6334694 B2 | 30-05-2018 |
| | | | JP | 2016533804 A | 04-11-2016 |
| | | | US | 2015107034 A1 | 23-04-2015 |
| | | | WO | 2015059688 A1 | 30-04-2015 |
| EP 3858288 | A1 | 04-08-2021 | NONE | | |
| GB 2602084 | A | 22-06-2022 | GB | 2602084 A | 22-06-2022 |
| | | | WO | 2022129840 A1 | 23-06-2022 |
| WO 2013001462 | A2 | 03-01-2013 | NONE | | |
| EP 3150082 | A1 | 05-04-2017 | EP | 3150082 A1 | 05-04-2017 |
| | | | WO | 2017058431 A1 | 06-04-2017 |

EPO FORM P0459

For more details about this annex : see Official Journal of the European Patent Office, No. 12/82